# EUROPEAN PATENT SPECIFICATION

(11) **EP 3 220 601 B1**
(45) Date of publication and mention of the grant of the patent: **24.04.2019**
(21) Application number: 17160103.2
(22) Date of filing: 09.03.2017
(51) Int. Cl.: G06Q 20/38, H04L 29/06, G06Q 20/40, G07F 7/10, H04W 12/06, H04W 12/04

(54) **KEY EVENT ENCRYPTION PROCESSING SYSTEM AND METHOD THEREOF**
SCHLÜSSELEREIGNISVERSCHLÜSSELUNGSVERARBEITUNGSSYSTEM UND VERFAHREN DAVON
SYSTÈME DE TRAITEMENT DE CHIFFREMENT D'UN ÉVÉNEMENT CLÉ ET PROCÉDÉ ASSOCIÉ

(30) Priority: 16.03.2016 KR 20160031269
(43) Date of publication of application: 20.09.2017
(73) Proprietor: Alticast Corporation, Seoul 06655 (KR)
(72) Inventor: Kim, Woo Hyuck, Hwaseong-si, Gyeonggi-do, 18430 (KR); Song, Moon Kyu, Seongnam-si, Gyeonggi-do, 13421 (KR); Park, Sung Hun, Seo-gu, Daejeon, 35248 (KR)
(74) Representative: V.O.

(56) References cited:
- US-A1- 2002 184 526
- US-A1- 2010 034 389
- US-A1- 2014 281 493
- US-A1- 2016 020 906

## Description

### BACKGROUND OF THE DISCLOSURE

### Field of the Disclosure

The present disclosure relates to a key event encryption processing system characterized by switching a subscriber terminal device to an encryption PIN mode according to a control command of a remote application server, transmitting a special key code converted from a key code, which is input in the encryption PIN mode, to the remote application server, receiving a request for a pin code corresponding to a special key code from the remote application server, and transmitting the pin code corresponding to the key code to the remote application server through a secure communication channel, and a method thereof.

### Description of the Related Art

Recently, many terminals including a set-top box (STB) have been used to establish infrastructure capable of maintaining an online status with a server of a provider using the Internet or a mobile communication network. A change from conventional content or unidirectional communication, by which service is unilaterally provided, to an interactive bidirectional communication environment, is presented as a new approach to terminal security.

A service for enhancing the security of a terminal by remotely verifying the integrity of the terminal or performing a security update capable of responding to a recently discovered threat through such bidirectional communication has recently been proposed.

However, a conventional terminal security technology has a problem that a bi-directional communication channel per se between a terminal and a server of a provider is not encrypted, a key event transmitted from the terminal is exposed to a network, and, on this network, a key event including a pin code is exposed, causing various security-related problems.

### [Related Documents]

### [Patent Documents]

Korean Patent Application Publication No. 2013-0138263 entitled "STREAMING DIGITAL VIDEO BETWEEN VIDEO DEVICES USING A CABLE TELEVISION SYSTEM," published on December 18, 2013.

Korean Patent No. 10-0800111 entitled "SET-TOP BOX INCLUDING REMOTE CONTROLLER HAVING OTP GENERATING FUNCTION AND SYSTEM AND METHOD FOR ELECTRONIC COMMERCE USING THE SAME," registered on January 25, 2008.

Korean Patent No. 10-0365256 entitled "METHOD FOR THE ENCRYPTION AND VERIFICATION OF CONTROL CODE DATA, AND THE REMOTE CONTROLLER SYSTEM THEREFOR," registered on December 05, 2002.

US2010/0034389 discloses a system which provides conditional access by a subscriber's network terminal over a computer network to encrypted content of a content provider. The conditional access system includes a content stream adapting server that receives streams of encrypted content from the content provider, reformats the encrypted content streams using session keys into a format suitable for transmission by IP addressing, and assigns a unique IP address in the computer network to the reformatted encrypted content streams. An access control server provides access to the encrypted content streams under control of an operator of the computer network. A validating server provides the session keys to the content stream adapting server, receives from a subscriber a request for an encrypted content stream, validates the subscriber for access to the requested encrypted content stream and, upon validation of the subscriber, provides the subscriber's network terminal with the session keys for the selected encrypted content stream through a secure network channel and authorizes the access control server to provide access to the selected encrypted content stream by the network terminal of the subscriber.

US2002/0184526 discloses a system in which a user logs into a networked client by presenting a smart card to a card reader attached to the client (or by some other authentication mechanism) and enters a PIN into the keyboard. The keycodes entered by the user logging into the client are obtained, translated into ASCII characters, and presented to the smart card. If the PIN is correct, the user is able to log in, otherwise the log in fails. In one embodiment, when the user enters the PIN, a translation table is downloaded from the server into the client. The client uses the translation table to convert the keycodes to ASCII text and presents the ASCII text to the smart card for authentication.

### SUMMARY OF THE DISCLOSURE

Therefore, the present invention has been made in view of the above problems, and it is one object of the present invention to provide a key event encryption processing system for communicating by encrypting a key event of a partial section through a secure communication channel between a remote application server and a subscriber terminal device, and a method thereof.

It is another object of the present invention to provide a key event encryption processing system for encrypting a key event minimizing changes in a communication structure for transferring a key event between a remote application server and a subscriber terminal device and implementation of a user interface (UI), and a method thereof.

It is another object of the present invention to provide a key event encryption processing system for communicating by effectively encrypting a pin code in a cloud environment using at least one of a communication channel and a protocol that are not encrypted, and a method thereof.

It is another object of the present invention to provide a key event encryption processing system for enhancing the security of a pin code by converting a key code, which is input from a subscriber terminal device, into a special key code, transmitting the input key code to a remote application server, receiving a request for a pin code corresponding to a special key code from the remote application server, and transmitting a pin code requiring encryption to the remote application server through a secure communication, and a method thereof

It is yet another object of the present invention to provide a key event encryption processing system for enhancing security by transmitting a pin code requiring security in a subscriber terminal device to a remote application server through a secure communication channel, and initializing the pin code stored in the subscriber terminal device based on a request for canceling an encryption PIN mode from the remote application server, and a method thereof.

In accordance with an aspect of the present invention, the above and other objects can be accomplished by the provision of a subscriber terminal device for key event encryption processing, at least temporarily implemented by a computer as defined in claim 1.

The encryption processing unit may receive an entry request command (encryptionPinModeEnter) of the encryption PIN mode from the remote application server and may perform control to switch the encryption PIN mode through the mode switching unit based on the entry request command.

The special key code may be arbitrarily generated irrespective of the key code.

The encryption processing unit may receive a pin code request command (getPin) including a request for the pin code through the secure communication channel and may perform control to transmit the stored pin code to the remote application server in response to the pin code request command.

The encryption processing unit may receive an exit request command of the encryption PIN mode (encryptionPinModeExit) from the remote application server and may perform control to exit the encryption PIN mode through the mode switching unit based on the received exit request command.

In accordance with another aspect of the present invention, the A subscriber terminal device for key event encryption processing further comprises a storage unit storing a pin code corresponding to the input key code.

In addition, the encryption processing unit may initialize the pin code stored in the storage unit after exiting the encryption PIN mode.

In accordance with another aspect of the present invention, there is provided a remote application server at least temporarily implemented by a computer as defined in claim 7.

The control unit may control of generation of an entry request command of the encryption PIN mode according to an entry determination result of the encryption PIN mode and may transmit the generated entry request command to the subscriber terminal device.

The control unit may receive a special key code converted from the key code that is input in the encryption PIN mode from the subscriber terminal device and may control generation of a pin code request command requesting a pin code corresponding to the received special key code.

The control unit may perform control to transmit the pin code request command to the subscriber terminal device through a secure communication channel.

The control unit may receive a pin code through the secure communication channel in response to the transmitted pin code request command from the subscriber terminal device.

The control unit may perform control generation of an exit request command for the encryption PIN mode after receiving the pin code and may transmit the generated exit request command to the subscriber terminal device, and the subscriber terminal device may initialize the stored pin code based on the received exit request command.

In accordance with another aspect of the present invention, there is provided a method of operating a subscriber terminal device as defined in claim 14.

In accordance with yet another aspect of the present invention, there is provided a method of operating a remote application server as defined in claim 15.

### BRIEF DESCRIPTION OF THE DRAWINGS

The above and other objects, features and other advantages of the present disclosure will be more clearly understood from the following detailed description taken in conjunction with the accompanying drawings, in which:
FIG. 1 illustrates a key event encryption processing system according to an embodiment of the present disclosure;
FIG. 2 illustrates the configurations of a remote application server and a subscriber terminal device of a key event encryption processing system according to an embodiment of the present disclosure;
FIG. 3 is a flowchart illustrating a process of encrypting a key event through a control command between a remote application server and a subscriber terminal device according to an embodiment of the present disclosure;
FIG. 4 is a graph illustrating a result of an encryption processing rate according to use of a secure communication channel;
FIG. 5 is a flowchart illustrating a process of a method of operating a subscriber terminal device according to an embodiment of the present disclosure; and
FIG. 6 is a flowchart illustrating a process of a method of operating a remote application server according to an embodiment of the present.

### DETAILED DESCRIPTION OF THE DISCLOSURE

The embodiments of the present invention are described with reference to the accompanying drawings and the description thereof but are not limited thereto.

The terminology used in the present disclosure serves the purpose of describing particular embodiments only and is not intended to limit the disclosure. As used in the disclosure and the appended claims, the singular forms "a", "an" and "the" are intended to include the plural forms as well, unless context clearly indicates otherwise. It will be further understood that the terms "includes" and/or "including," when used in this specification, specify the presence of stated features, steps, operations, elements, and/or components, but do not preclude the presence or addition of one or more other features, steps, operations, elements, components, and/or groups thereof.

It should not be understood that arbitrary aspects or designs disclosed in "embodiments", "examples", "aspects", etc. used in the specification are more satisfactory or advantageous than other aspects or designs.

In addition, the expression "or" means "inclusive or" rather than "exclusive or". That is, unless otherwise mentioned or clearly inferred from context, the expression "x uses a or b" means any one of natural inclusive permutations.

In addition, as used in the description of the invention and the appended claims, the singular forms "a", "an" and "the" are intended to include the plural forms as well, unless context clearly indicates otherwise.

In addition, terms such as "first" and "second" are used herein merely to describe a variety of constituent elements, but the constituent elements are not limited by the terms. The terms are used only for the purpose of distinguishing one constituent element from another constituent element.

Unless otherwise defined, all terms (including technical and scientific terms) used herein have the same meaning as commonly understood by one of ordinary skill in the art. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

Meanwhile, in the following description of the present invention, a detailed description of known functions and configurations incorporated herein will be omitted when it may make the subject matter of the present invention unclear. The terms used in the specification are defined in consideration of functions used in the present invention, and can be changed according to the intent or conventionally used methods of clients, operators, and users. Accordingly, definitions of the terms should be understood on the basis of the entire description of the present specification.

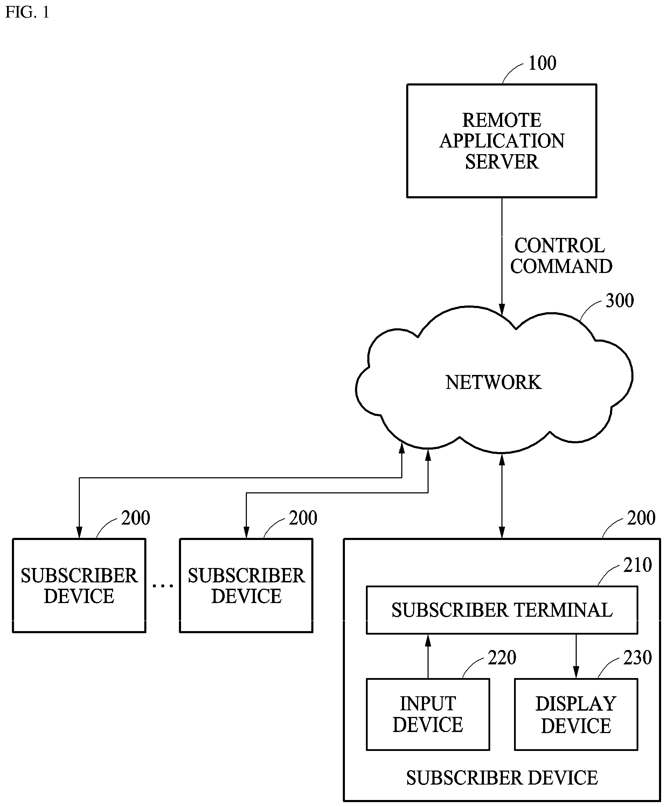

FIG. 1 illustrates a key event encryption processing system according to an embodiment of the present disclosure.

Referring to FIG. 1, the key event encryption processing system according to an embodiment of the present disclosure includes a remote application server 100 and a subscriber device 200.

The remote application server 100 according to an embodiment of the present disclosure analyzes state information on the subscriber terminal device 210, generates a control command according to the analyzed state information, transmits the generated control command to the subscriber device 200, and controls the subscriber terminal device 210 based on the control command or controls rendering of at least one of content and a UI resource in the subscriber terminal device 210.

In particular, the remote application server 100 collects state information on the subscriber terminal device 210 in the subscriber device 200 through a network 300, and a control command for rendering control of at least any one of a content and a UI resource in the subscriber terminal device 210 is generated from the collected state information.

In addition, the remote application server 100 may generate a control command to control the subscriber terminal device 210 per se.

The remote application server 100 transmits the generated control command to the subscriber device 200 through the network 300.

The state information according to an embodiment of the present disclosure may be an information related to the subscriber terminal device 210 such that the subscriber terminal device 210 performs a specific function according to a control command from the remote application server 100.

For example, the state information may include at least any one of device information, such as resolution information of a display device 230 interworking with the subscriber terminal device 210, display screen rotation information, and an input device 220 interworking with the subscriber terminal device 210, and service subscription information.

The state information may be generated with connection information from the subscriber terminal device 210 upon session connection between the remote application server 100 and the subscriber terminal device 210, and the generated state information may be transmitted to the remote application server 100. In addition, the state information may be generated from the subscriber terminal device 210 in response to user input and may be transmitted to the remote application server 100.

The remote application server 100 of the present disclosure may be a head end system or a cloud-based media server. In addition, the remote application server 100 of the present disclosure may receive an application for providing services from an application storage (not shown) and may receive data, such as subscriber information, media information, or social network association information, from a data storage (not shown).

The function of the subscriber terminal device 210 per se in the subscriber device 200 may be performed according to a received control command, or the subscriber terminal device 210 may perform rendering by receiving at least any one of content and UI resources from a content storage (not shown) and a UI resource storage (not shown), which are separated from the remote application server 100, through the network 300.

The subscriber terminal device 210 performs rendering of at least any one of a received content and a received UI resource based on a control command received from the remote application server 100.

According to an embodiment of the present disclosure, the subscriber device 200 may request or receive content through a content storage and a formed content channel based on a control command, and may request or receive a UI resource through a UI resource storage and a formed UI resource channel.

The UI resource may be realized using at least one of a web page, a bitmap for an application, and a graphic primitive for an application.

According to an embodiment of the present disclosure, the UI resource may include a business service and a user interface receiving input of a user command for controlling the subscriber device 200 from the outside.

In addition, according to another embodiment of the present disclosure, the subscriber terminal device 210 may determine whether session connection with the remote application server 100 is normal and, when the session connection is not smooth, may provide a user interface to a user based on a hybrid control command for controlling reception of a resource related to generation and rendering of state information.

However, as described above, in the case of bidirectional communication between the cloud-based remote application server 100 and the subscriber device 200, a key event transmitted from the subscriber device 200 is directly exposed to the network 300 because a channel per se is not encrypted, thereby posing a security vulnerability.

To address such a problem, the remote application server 100 according to an embodiment of the present disclosure determines entry of an encryption PIN mode according to a key event received from the subscriber terminal device 210, generates a control command according to the determination result, and performs an encryption process for a key code that is input in an encryption PIN mode.

In particular, the remote application server 100 generates a control command including at least one of an entry request command of an encryption PIN mode (encryptionPinModeEnter) according to a determination result of entry of the encryption PIN mode according to a key event received from the subscriber terminal device 210 in the subscriber device 200, a pin code request command (getPin), and an exit request command of the encryption PIN mode (encryptionPinModeExit).

The remote application server 100 transmits the generated control command to the subscriber device 200 through the network 300.

In addition, the subscriber terminal device 210 in the subscriber device 200 according to an embodiment of the present disclosure switches to an encryption PIN mode based on the control command received from the remote application server 100, converts a key code, which is input in the encryption PIN mode, into a special key code, and transmits the converted key code to the remote application server 100.

In addition, the subscriber terminal device 210 in the subscriber device 200 receives a request for a pin code corresponding to a special key code from the remote application server 100 through a secure communication channel, and transmits a pin code, which is stored through the secure communication channel corresponding to the request, to the remote application server 100.

Therefore, the subscriber terminal device 210 in the subscriber device 200 according to an embodiment of the present disclosure may encrypt a key event of a partial section using the secure communication channel based on the control command received from the remote application server 100 and transmit the encrypted key event to the remote application server 100.

In accordance with an embodiment of the present disclosure, the secure communication channel may be a Secure Sockets Layer (SSL) communication channel, but the present disclosure is not limited thereto.

In addition, the subscriber device 200 according to an embodiment of the present disclosure may include the subscriber terminal device 210, the input device 220, and the display device 230. In addition, as illustrated in FIG. 1, at least one subscriber device 200 may be provided.

The subscriber terminal device 210 of the present disclosure may be an electronic device equipped with a wired/wireless communication module such as a Set-Top Terminal (STT), A Set-Top Box (STB), a communication terminal, a PC, a mobile communication terminal, a smart phone, a notepad, a PDA, or a tablet PC, but the present disclosure is not limited thereto. Alternatively, the subscriber terminal device 210 may be a terminal device capable of accessing to and communicating with the remote application server 100 through the network 300.

According to an embodiment of the present disclosure, the subscriber terminal device 210 may be a terminal device capable of performing signal processing, bandwidth control processing, and graphics processing.

In particular, the subscriber terminal device 210 may be a terminal device that performs a graphics processing process such as reception of an MPEG-2 transport stream for a content including video content and audio content, decoding of the content, and rendering of the decoded content.

The input device 220 may be a device capable of receiving user input, such as a remote control, a keyboard, or a touch screen device

The subscriber terminal 210 may receive interaction-based user input based on the bidirectionality of UI data rendered from the input device 220 through the display device 230.

For example, the user input may include various signals such as numeric key input, key event encryption request, session initialization, and clickstream.

According to an embodiment of the present disclosure, the subscriber terminal device 210 may perform rendering for the resource in direct response to the user input, without depending on the control command from the remote application server 100 according to the type of the user input received through the input device 220.

For example, when the user input is reprocessed in accordance with a resource state provided to a current user, transmission of the state information to the remote application server 100 might not be required in the reprocessing of the resource. That is, the subscriber terminal 210 may directly process the resource in response to the user input received through the input device 220.

The display device 230 may be a device providing visual and auditory content and UI data to a user, such as a television, a computer monitor, a communication monitor, or a smart phone display.

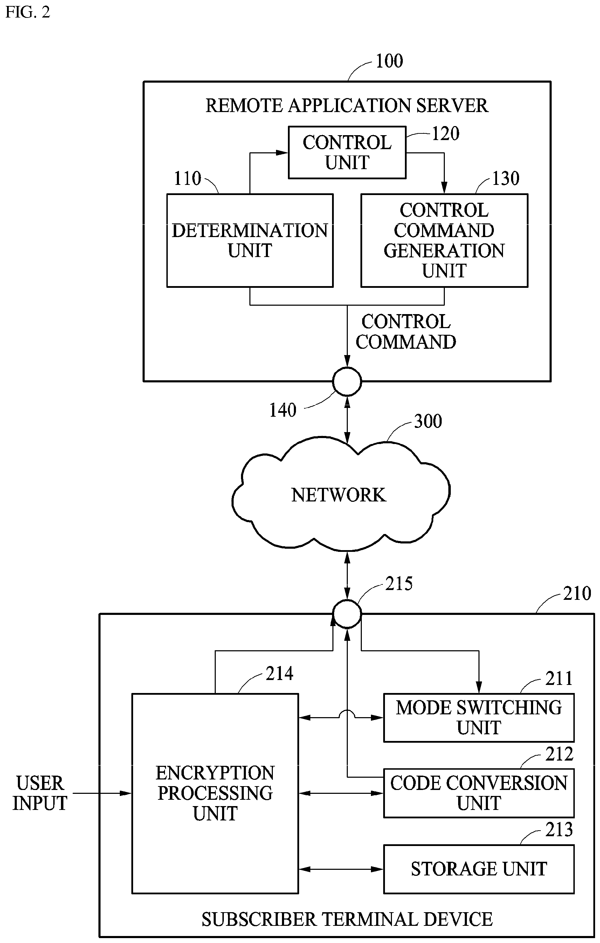

FIG. 2 illustrates the configurations of a remote application server and a subscriber terminal device of a key event encryption processing system according to an embodiment of the present disclosure.

The remote application server 100 according to the embodiment of the present invention determines entry of the encryption PIN mode according to a key event received from the subscriber terminal device 210, generates a control command according to the determination result, transmits the generated control command to the subscriber terminal device 210, and the controls subscriber terminal device 210 based on the control command or controls an encryption process in the subscriber terminal device 210

To accomplish this, the remote application server 100 includes a determination unit 110, a control command generation unit 130, and a control unit 120.

The determination unit 110 determines entry of the encryption PIN mode from the key event received from the subscriber terminal device 210.

The determination unit 110 receives a key event generated from the subscriber terminal device 210 through the network 300 according to a user input.

The key event may be a signal for the subscriber terminal 210 to perform a specific function by a control command from the remote application server 100. For example, the key event may be generated at a specific time point required for security from user input through the input device 220, which is shown in FIG. 1, interworking with the subscriber terminal device 210.

The control command generation unit 130 generates a control command including at least one of an entry request command of the encryption PIN mode, a pin code request command, and an exit request command of the encryption PIN mode according to a determination result of entry of the encryption PIN mode.

For example, the control command generation unit 130 may generate the entry request command of the encryption PIN mode based on a determination result of entry of the encryption PIN mode, determined by the determination unit 110, according to a key event generated and received at a specific time point requiring security from the user input through the input device 220.

In addition, the control command generation unit 130 may generate a pin code request command for requesting a pin code based on the special key code received from the subscriber terminal device 210 and may generate an exit request command of the encryption PIN mode for requesting exit for the encryption PIN mode based on the pin code received from the subscriber terminal device 210.

For example, the control command generation unit 130 can receive "****" as a special key code combined with special characters according to a user input from the subscriber terminal device 210. However, the special key code may be a special key code combined with special characters such as "#$%&," other than "****," but the number, combination and order of special characters are not limited thereto.

The control command generation unit 130 transmits a generated control command to a mode switching unit 211 and an encryption processing unit 214 of the subscriber terminal device 210 through the network 300.

According to an embodiment of the present disclosure, the control command generation unit 130 may generate a control command including an image required upon rendering in the subscriber terminal device 210.

The control unit 120 performs an encryption process for a key code that is input in the encryption PIN mode.

In particular, the control unit 120 may control generation of an entry request command of the encryption PIN mode by the control command generation unit 130, based on a determination result of entry of an encryption PIN mode according to a key event, which is received from the subscriber terminal device 210, by the determination unit 110 and may perform control such that the entry request command of the generated encryption PIN mode is transmitted to the subscriber terminal device 210 through the network 300.

Accordingly, the subscriber terminal device 210 can be switched to the encryption PIN mode based on the entry request command of the encryption PIN mode received from the remote application server 100

In addition, the subscriber terminal device 210 may convert a key code, which is input in the encryption PIN mode, into a special key code and may transmit the converted key code to the remote application server 100, and the control unit 120 may control generation of a pin code request command from the control command generation unit 130 to request a pin code corresponding to the special key code received from the subscriber terminal device 210.

For example, the subscriber terminal device 210 may perform conversion into a special key code combined with special characters corresponding to numeric keys input by a user in the encryption PIN mode converted based on the entry request command of the received encryption PIN mode.

In addition, the control unit 120 may perform control such that the pin code request command is transmitted to the subscriber terminal device 210 through a secure communication channel.

Accordingly, the encryption processing unit 214 of the subscriber terminal device 210 may transmit a stored pin code based on the pin code request command received from the remote application server 100 via the secure communication channel.

The control unit 120 may control generation of an exit request command of the encryption PIN mode from the control command generation unit 130 to request exit from the encryption PIN mode after receiving the pin code from the subscriber terminal device 210.

In addition, the control unit 120 may perform control to transmit the exit request command of the generated encryption PIN mode to the subscriber terminal device 210, and the exit request command of the encryption PIN mode may be transmitted to the subscriber terminal device 210 through the network 300.

Accordingly, the subscriber terminal device 210 may initialize the pin code stored based on the exit request command of the received encryption PIN mode.

In addition, the remote application server 100 according to an embodiment of the present disclosure may further include a transport module 140 forming a signal path with the subscriber terminal device 210 related to transmission of a control command. Preferably, the signal path may form a single path with the transport module 215 of the subscriber terminal device 210.

The remote application server 100 may efficiently control the subscriber terminal device 210 through the signal path of the transport module 140.

For example, the remote application server 100 may efficiently control verification with a local application installed in the subscriber terminal device 210 and the subscriber terminal device 210 through the transport module 140.

The subscriber terminal device 210 according to an embodiment of the present disclosure performs the function thereof per se according to a control command received from the control command generation unit 130.

In particular, the subscriber terminal device 210 switches to an encryption PIN mode based on the control command received from the remote application server 100, converts a key code, which is input in the encryption PIN mode, to a special key code, and transmits the converted key code to the remote application server 100. Subsequently, the subscriber terminal 210 receives a request for the pin code from the remote application server 100, and transmits the stored pin code to the remote application server 100 through the secure communication channel in response to the request

To accomplish this, the subscriber terminal device 210 according to an embodiment of the present disclosure includes a mode switching unit 211, a code conversion unit 212, a storage unit 213, and an encryption processing unit 214.

The mode switching unit 211 switches to an encryption PIN mode based on the control command received from the remote application server 100.

More particularly, the mode switching unit 211 may switch from a key event delivery mode, as a normal mode, to an encryption PIN mode based on an entry request command of the encryption PIN mode received from the control command generation unit 130 of the remote application server 100.

In addition, the mode switching unit 211 may exit the encryption PIN mode and may switch to a normal mode based on an exit request command of the encryption PIN mode received from the control command generation unit 130 of the remote application server 100.

The code conversion unit 212 converts a key code, which is input in the switched encryption PIN mode based on the entry request command of the encryption PIN mode received from the remote application server 100, to a special key code and transmits the converted special key code to the remote application server 100.

More particularly, the code conversion unit 212 may convert a designated key code corresponding to a numeric key received from a user input into a special key code through the input device 220, which is shown in FIG. 1, interworking with the subscriber terminal device 210. Here, the special key code may be arbitrarily generated irrespective of the key code and may be generated one time according to the input key code.

In addition, the code conversion unit 212 may transmit the generated special key code to the remote application server 100 through the network 300.

For example, in the switched encryption PIN mode, the code conversion unit 212 may convert a special key code of at least one, i.e., "*", of any special characters to correspond to "1" when a user inputs "1" through the input device 220, and then a special key code according to user's input may be converted into "**" by converting a special key code of "*" to correspond to "2" when the user inputs "2". Subsequently, when the user continuously inputs "3" and "4", the code conversion unit 212 may covert a special key code of "****" according to user input by converting a special key code to correspond to "3" and "4".

More particularly, when the user sequentially inputs a numeric key "1234" in the order of 1, 2, 3, and 4 through the input device 220, the code conversion unit 212 may convert a special key code sequentially combined with special characters in the order of "*", "**", "***," and "****," and may transmit "****", which is finally converted into the special key code, to the remote application server 100.

According to an embodiment of the present disclosure, the code conversion unit 212 may perform conversion into a special key code combined with special characters, such as "#$%&," other than "****," but the number, combination, and order of special characters are not limited thereto.

The storage unit 213 stores a pin code corresponding to the input key code.

The storage unit 213 may store the pin code corresponding to the key code received via user input, and the pin code may be initialized by a control command received from the remote application server 100.

According to an embodiment of the present disclosure, the storage unit 213 may store "1234," which is input sequentially by a user through the input device 220, as a pin code.

The encryption processing unit 214 receives a request for a pin code corresponding to the special key code from the remote application server 100 through the secure communication channel and performs controls such that the pin code stored through the secure communication channel is transmitted to the remote application server 100 in response to the request.

The encryption processing unit 214 may transmit a key event received via user input to the remote application server 100 through the input device 220, which is shown in FIG. 1, interworking with the subscriber terminal device 210.

Accordingly, the determination unit 110 of the remote application server 100 determines entry of the encryption PIN mode from the received key event, and the control command generation unit 130 may generate an entry request command of the encryption PIN mode according to the entry determination result of the encryption PIN mode and may transmit the generated entry request command to the encryption processing unit 214 of the subscriber terminal device 210.

Subsequently, the encryption processing unit 214 may receive the entry request command of the encryption PIN mode, which is based on the entry determination result of the encryption PIN mode according to the key event, from the remote application server 100 and may control switching to the encryption PIN mode through the mode switching unit 211.

In addition, the encryption processing unit 213 may convert a key code, which is input in the encryption PIN mode from the code conversion unit 212, into a special key code and may perform control such that the converted key code is transmitted to the remote application server 100.

Accordingly, the control unit 120 of the remote application server 100 may generate a pin code request command from the control command generation unit 130 to request a pin code corresponding to the special key code received from the code conversion unit 212 and may transmit the generated pin code request command to the encryption processing unit 214 through the secure communication channel.

According to an embodiment of the present disclosure, the encryption processing unit 213 may receive a UI resource, which is converted into a special key code combined with special characters corresponding to numeric keys input by a user, from an external UI resource storage (not shown) and may provide the received UI resource to the user through the display device 230 while controlling rendering thereof in the encryption PIN mode switched according to the entry request command of the encryption PIN mode.

Subsequently, the encryption processing unit 214 may receive a pin code request command, which includes a request for the pin code according to the special key code, from the remote application server 100 through the secure communication channel, and may perform control such that the pin code, which is stored in the storage unit 213, corresponding to the pin code request command, is transmitted to the remote application server 100 through the secure channel communication.

According to an embodiment of the present disclosure, the encryption processing unit 214 may perform control such that the pin code, i.e., "1234," sequentially input and stored by the user is transmitted the remote application server 100 through the secure channel communication.

Accordingly, the control unit 120 of the remote application server 100 receives the pin code from the encryption processing unit 214 through the secure communication channel, followed by generating an exit request command of the encryption PIN mode from the control command generation unit 130 to request exit from the encryption PIN mode and transmitting the generated exit request command to the encryption processing unit 214.

Subsequently, the encryption processing unit 214 may receive the exit request command of the encryption PIN mode from the remote application server 100 and may perform control to exit the encryption PIN mode through the mode switching unit 211 based on the exit request command. In addition, after exiting the encryption PIN mode, the encryption processing unit 214 may initialize the pin code stored in the storage unit 213.

According to an embodiment of the present disclosure, the encryption PIN mode includes a cipher PIN mode.

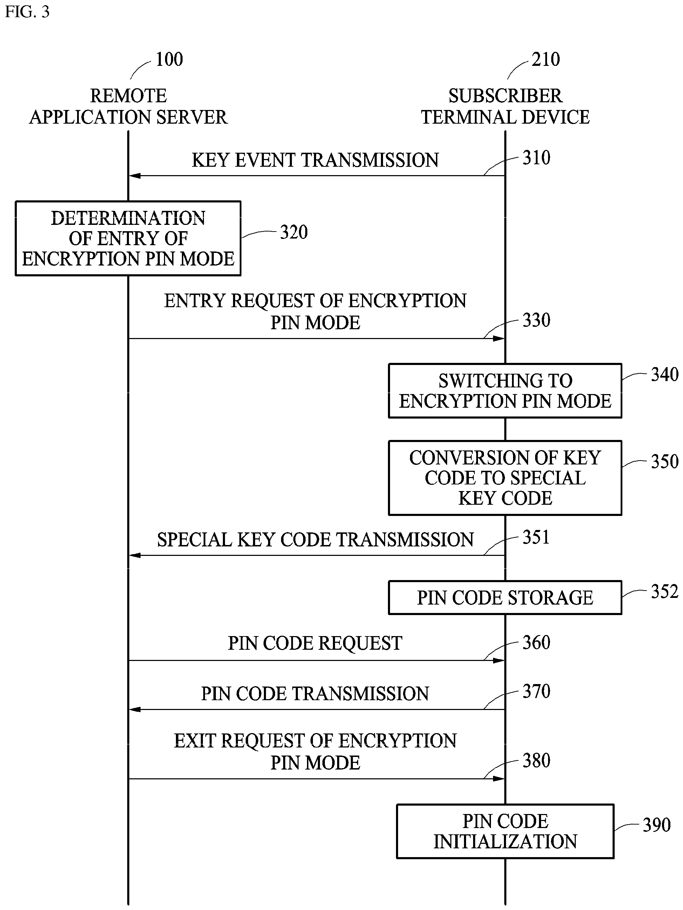

FIG. 3 is a flowchart illustrating a process of encrypting a key event through a control command between a remote application server and a subscriber terminal device according to an embodiment of the present disclosure.

Referring to FIG. 3, in a state wherein a session between the remote application server 100 according to an embodiment of the present disclosure and the subscriber terminal device 210 is established, the subscriber terminal device 210 transmits the key event to the remote application server 100 (step 310).

For example, in step 310, the subscriber terminal 210 may transmit a signal according to the occurrence of a key event, which occurs at a specific time point requiring security from user input, to the remote application server 100 through the network.

Subsequently, in step 320, the remote application server 100 determines entry of an encryption PIN mode from the received key event.

In step 330, the remote application server 100 generates a control command including the entry request command of the encryption PIN mode, transmits the generated control command to the subscriber terminal device 210, and requests entry of the encryption PIN mode.

In step 340, the subscriber terminal device 210 switches to the encryption PIN mode based on the entry request command of the received encryption PIN mode.

In particular, step 340 may be a step of switching from a key event delivery mode, as a normal mode, to an encryption PIN mode based on the entry request command of the encryption PIN mode received from the remote application server 100.

Subsequently, the subscriber terminal device 210 converts a key code into a special key code in step 350, transmits the converted special key code to the remote application server 100 in step 351, and stores a pin code in step 352.

According to an embodiment of the present disclosure, the subscriber terminal device 210 may convert a key code into a special key code in step 350, may store a pin code corresponding to the key code in step 352, and may transmit the special key code to the remote application server 100 in step 351. That is, steps 350, 351, and 352 may be changed according to an embodiment of the present disclosure and are not limited to the aforementioned particulars.

More particularly, in step 350, the subscriber terminal device 210 may convert a designated key code corresponding to a numeric key received via user input to a special key code. Here, the special key code may be arbitrarily generated irrespective of the key code and may be generated one time according to the input key code.

Subsequently, the subscriber terminal device 210 may transmit the converted special key code to the remote application server 100 through the network in step 351 and may store a pin code corresponding to the key code received by user input in step 352. According to an embodiment of the present disclosure, steps 351 and step 352 may be performed at the same time.

According to another embodiment of the present disclosure, the remote application server 100 may store a pin code corresponding to the special key code.

Subsequently, in step 360, the remote application server 100 generates a pin code request command to request a pin code corresponding to the special key code received from the subscriber terminal device 210, and transmits the generated pin code request command to the subscriber terminal device 210 to request a pin code.

In particular, in step 360, the remote application server 100 generates a pin code request command and requests the pin code to the subscriber terminal device 210 through the secure communication channel.

Subsequently, in step 370, the subscriber terminal device 210 transmits the stored pin code to the remote application server 100 through the secure communication channel in response to the received request.

In step 380, the remote application server 100 receives the pin code from the subscriber terminal device 210, followed by generating an exit request command of the encryption PIN mode to request exit from the encryption PIN mode and transmitting the generated exit request command to the subscriber terminal device 210 to request exit from the encryption PIN mode.

Subsequently, in step 390, the subscriber terminal device 210 may initialize the stored pin code based on the exit request command of the encryption PIN mode received from the remote application server 100.

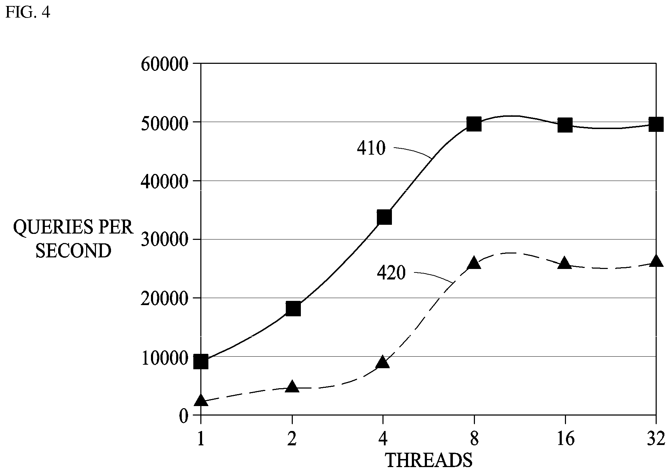

FIG. 4 is a graph illustrating a result of an encryption processing rate according to use of a secure communication channel.

More particularly, referring to FIG. 4, it can be confirmed that queries per second according to threads in the case (410), in which the secure communication channel is not used, are higher than those in the case (420) in which the secure communication channel is used.

For example, in the case (420) in which the secure communication channel is used, a processing rate of queries per second according to threads may be indicated when secure communication channels of 1024 bits, 2048 bits, and 4096 bits are used.

That is, referring to FIG. 4, an encryption processing rate is higher in the case (410) in which the secure communication channel is not used. Accordingly, the key event encryption processing system of the present disclosure may further increase an overall encryption processing efficiency by using the secure communication channel in a partial section.

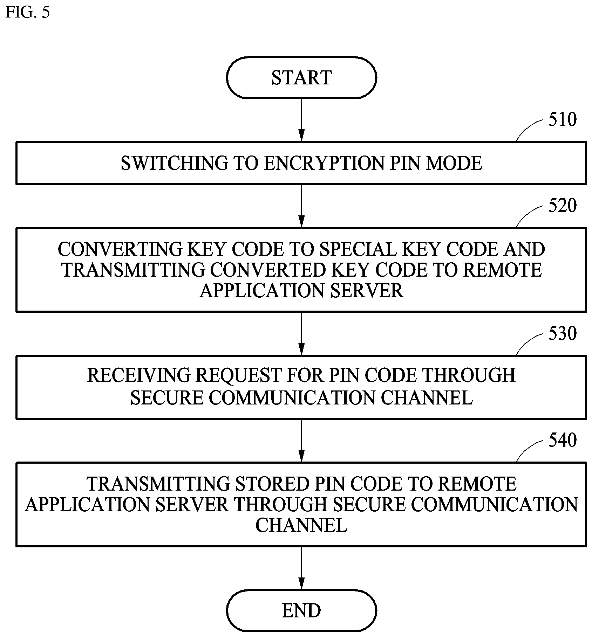

FIG. 5 is a flowchart illustrating a process of a method of operating a subscriber terminal device according to an embodiment of the present disclosure.

Referring to FIG. 5, switching to an encryption PIN mode is performed in step 510. In particular, in step 510, switching to the encryption PIN mode (encryption PIN mode) is performed based on a control command received from a remote application server.

Step 510 may be a step of switching from a key event delivery mode, as a normal mode, to an encryption PIN mode based on an entry request command of an encryption PIN mode received from the remote application server.

Subsequently, in step 520, a key code is converted into a special key code and the converted special key code is transmitted to the remote application server. In particular, in step 520, the key code input in the encryption PIN mode is converted into the special key code and the converted special key code is transmitted to the remote application server.

For example, step 520 may be a step of converting a designated key code corresponding to a numeric key received via user input to a special key code. Here, the special key code may be arbitrarily generated irrespective of the key code and may be generated one time according to the input key code.

In step 530, a request for the pin code corresponding to the special key code is received from the remote application server through a secure communication channel.

Subsequently, in step 540, the subscriber terminal device transmits the stored pin code to the remote application server through the secure communication channel in response to the request received from the remote application server.

According to an embodiment of the present disclosure, the subscriber terminal device may initialize the pin code based on the control command received from the remote application server after step 540.

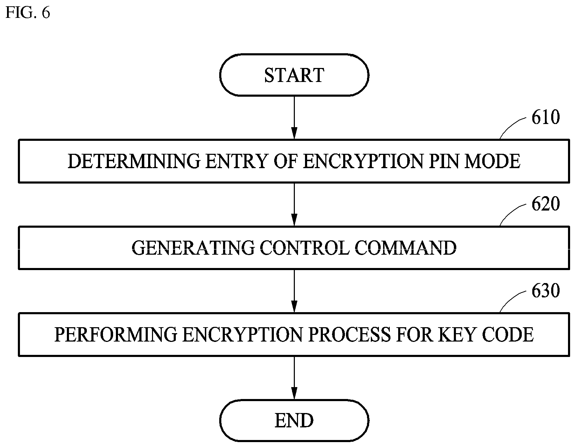

FIG. 6 is a flowchart illustrating a process of a method of operating a remote application server according to an embodiment of the present disclosure.

Referring to FIG. 6, in step 610, entry of an encryption PIN mode is determined according to a key event received from the subscriber terminal device.

For example, step 610 may be a step of receiving a key event generated according to user input from the subscriber terminal device through a network.

In step 620, a control command including at least any one of an entry request command of the encryption PIN mode (encryptionPinModeEnter), a pin code request command (getPin), and an exit request command of the encryption PIN mode (encryptionPinModeExit) is generated according to a determination result of entry of the encryption PIN mode.

Subsequently, in step 630, an encryption process for the key code that is input in the encryption PIN mode is performed.

As apparent from the above description, in accordance with the present disclosure, communication may be performed by encrypting a key event of a partial section through a secure communication channel between a remote application server and a subscriber terminal device.

In addition, in accordance with the present disclosure, a key event may be encrypted minimizing changes in a communication structure for transferring a key event between a remote application server and a subscriber terminal device and implementation of a user interface (UI).

In addition, in accordance with the present disclosure, communication may be performed by effectively encrypting a pin code in a cloud environment using at least one of a communication channel and a protocol that are not encrypted.

In addition, in accordance with the present disclosure, the security of a pin code may be enhanced by converting a key code, which is input from a subscriber terminal device, into a special key code, transmitting the input key code to a remote application server, receiving a request for a pin code corresponding to a special key code from the remote application server, and transmitting a pin code requiring encryption to the remote application server through a secure communication.

Further, in accordance with the present disclosure, security may be enhanced by transmitting a pin code requiring security in a subscriber terminal device to a remote application server through a secure communication channel, and initializing the pin code stored in the subscriber terminal device based on a request for canceling an encryption PIN mode from the remote application server.

Embodiments of the present invention can include a computer readable medium including program commands for executing operations implemented through various computers. The computer readable medium can store program commands, data files, data structures or combinations thereof. The program commands recorded in the medium may be specially designed and configured for the present invention or be known to those skilled in the field of computer software. Examples of a computer readable recording medium include magnetic media such as hard disks, floppy disks and magnetic tapes, optical media such as CD-ROMs and DVDs, magneto-optical media such as floptical disks, or hardware devices such as ROMs, RAMs and flash memories, which are specially configured to store and execute program commands. Examples of the program commands include a machine language code created by a compiler and a high-level language code executable by a computer using an interpreter and the like. The hardware devices may be configured to operate as one or more software modules to perform operations in the embodiments, and vice versa.

Although exemplary embodiments of the present invention have been disclosed for illustrative purposes, those skilled in the art will appreciate that various modifications, additions and substitutions are possible, without departing from the scope of the invention as disclosed in the accompanying claims. For example, proper result may be achieved even if the techniques described above are implemented in an order different from that for the disclosed method, and/or disclosed constituents such as a system, structure, device and circuit are coupled to or combined with each other in a form different from that for the disclosed method or replaced by other constituents or equivalents.

It should be understood, therefore, that there is no intent to limit the invention to the embodiments disclosed, rather, the invention is to cover all modifications, equivalents, and alternatives falling within the scope of the invention as defined by the claims.

### [Description of Symbols]

100: REMOTE APPLICATION SERVER
200: SUBSCRIBER DEVICE
210: SUBSCRIBER TERMINAL DEVICE
300: NETWORK

## Claims

1. A subscriber terminal device (210) for key event encryption processing, at least temporarily implemented by a computer, comprising:
a mode switching unit (211) switching to an encryption PIN mode based on a control command received from a remote application server (100);
a code conversion unit (212) converting a key code, which is input in the encryption PIN mode, into a special key code and transmitting the converted special key code to the remote application server (100); and
an encryption processing unit (214) receiving a request for a pin code corresponding to the special key code from the remote application server (100) through a secure communication channel and performing control such that the pin code stored in the subscriber terminal device (210) is transmitted to the remote application server (100) through the secure communication channel in response to the request,
wherein the remote application server (100) sends a pin code request command (getPin) comprising a request for the pin code through the secure communication channel in order to respond to the special key code received from the encryption processing unit (214),
wherein the subscriber terminal device (210) determines whether a session connection with the remote application server (100) is normal, and
generates a hybrid control command for controlling a rendering at a renderer if the session connection is not smooth.

2. The subscriber terminal device (210) according to claim 1, wherein the encryption processing unit (214) receives an entry request command (encryptionPinModeEnter) of the encryption PIN mode from the remote application server (100) and performs control to switch the encryption PIN mode through the mode switching unit based on the entry request command.

3. The subscriber terminal device (210) according to claim 1, wherein the special key code is arbitrarily generated irrespective of the key code.

4. The subscriber terminal device (210) according to claim 1, wherein the encryption processing unit (214) receives the pin code request command (getPin) comprising the request for the pin code through the secure communication channel and performs control to transmit the stored pin code to the remote application server (100) in response to the pin code request command.

5. The subscriber terminal device (210) according to claim 4, wherein the encryption processing unit (214) receives an exit request command of the encryption PIN mode (encryptionPinModeExit) from the remote application server (100) and performs control to exit the encryption PIN mode through the mode switching unit based on the received exit request command.

6. The subscriber terminal device (210) according to claim 5, further comprising storage unit (213) storing a pin code corresponding to the input key code, wherein the encryption processing unit (214) initializes the pin code stored in the storage unit (213) after exiting the encryption PIN mode.

7. A remote application server (100) at least temporarily implemented by a computer, comprising:
a determination unit (110) determining entry of an encryption PIN mode from a key event received from a subscriber terminal device (210);
a control command generation unit (130) generating a control command comprising at least any one of an entry request command of the encryption PIN mode (encryptionPinModeEnter), a pin code request command (getPin), and an exit request command of the encryption PIN mode (encryptionPinModeExit) according to the entry determination result of the encryption PIN mode; and
a control unit (120) performing an encryption process for a key code that is input in the encryption PIN mode, wherein the remote application server (100) sends a pin code request command (getPin) comprising a request for the pin code through the secure communication channel in order to respond to the special key code received from the encryption processing unit (214),
wherein the subscriber terminal device (210) determines whether a session connection with the remote application server (100) is normal, and
generates a hybrid control command for controlling a rendering at a renderer if the session connection is not smooth.

8. The remote application server (100) according to claim 7, wherein the control unit (120) controls of generation of an entry request command of the encryption PIN mode according to an entry determination result of the encryption PIN mode and transmits the generated entry request command to the subscriber terminal device (210).

9. The remote application server (100) according to claim 7, wherein the control unit (120) receives a special key code converted from the key code that is input in the encryption PIN mode from the subscriber terminal device (210) and controls generation of a pin code request command requesting a pin code corresponding to the received special key code.

10. The remote application server (100) according to claim 9, wherein the control unit (120) performs control to transmit the pin code request command to the subscriber terminal device (210) through a secure communication channel.

11. The remote application server (100) according to claim 10, wherein the control unit (120) receives a pin code through the secure communication channel in response to the transmitted pin code request command from the subscriber terminal device (210).

12. The remote application server (100) according to claim 11, wherein the control unit (120) performs control generation of an exit request command for the encryption PIN mode after receiving the pin code and transmits the generated exit request command to the subscriber terminal device (210).

13. The remote application server (100) according to claim 12, wherein the subscriber terminal device (210) initializes the stored pin code based on the received exit request command.

14. A method of operating a subscriber terminal device (210), the method comprising:
switching to an encryption PIN mode based on a control command received from a remote application server (100);
converting a key code, which is input in the encryption PIN mode, into a special key code and transmitting the converted special key code to the remote application server (100);
receiving a request for a pin code corresponding to the special key code from the remote application server (100) through a secure communication channel; and
transmitting the stored pin code to the remote application server (100) through the secure communication channel in response to the request, wherein the remote application server (100) sends a pin code request command (getPin) comprising a request for the pin code through the secure communication channel in order to respond to the special key code received from the encryption processing unit (214),
wherein the subscriber terminal device (210) determines whether a session connection with the remote application server (100) is normal, and
generates a hybrid control command for controlling a rendering at a renderer if the session connection is not smooth.

15. A method of operating a remote application server (100), the method comprising:
determining entry of an encryption PIN mode according to a key event received from a subscriber terminal device (210);
generating a control command comprising at least any one of an entry request command of the encryption PIN mode (encryptionPinModeEnter), a pin code request command (getPin), and an exit request command of the encryption PIN mode (encryptionPinModeExit) according to the entry determination result of the encryption PIN mode; and
performing an encryption process for a key code that is input in the encryption PIN mode, wherein the remote application server (100) sends a pin code request command (getPin) comprising a request for the pin code through the secure communication channel in order to respond to the special key code received from the encryption processing unit (214),
wherein the subscriber terminal device (210) determines whether a session connection with the remote application server (100) is normal, and
generates a hybrid control command for controlling a rendering at a renderer if the session connection is not smooth.

## Patentansprüche

1. Teilnehmerendgerät (210) für eine Schlüsselereignis-Verschlüsselungsverarbeitung, die mindestens zweitweise von einem Computer implementiert wird, umfassend:
eine Modusumschalteinheit (211), die auf Basis eines von einem Remote-Application-Server (100) empfangenen Steuerbefehls in einen Verschlüsselungs-PIN-Modus umschaltet;
eine Codeumwandlungseinheit (212), die einen Schlüsselcode, der in dem Verschlüsselungs-PIN-Modus eingegeben wird, in einen speziellen Schlüsselcode umwandelt und den umgewandelten speziellen Schlüsselcode an den Remote-Application-Server (100) überträgt; und
eine Verschlüsselungsverarbeitungseinheit (214), die eine Anforderung eines PIN-Codes, der dem speziellen Schlüsselcode entspricht, über einen sicheren Kommunikationskanal von dem Remote-Application-Server (100) empfängt, und eine Steuerung so durchführt, dass der in dem Teilnehmerendgerät (210) gespeicherte PIN-Code als Antwort auf die Anforderung über den sicheren Kommunikationskanal an den Remote-Application-Server (100) übertragen wird,
wobei der Remote-Application-Server (100) einen PIN-Code-Anforderungs-Befehl (getPin), der eine Anforderung des PIN-Codes umfasst, über den sicheren Kommunikationskanal sendet, um auf den von der Verschlüsselungsverarbeitungseinheit (214) empfangenen speziellen Schlüsselcode zu antworten,
wobei das Teilnehmerendgerät (210) bestimmt, ob eine Sitzungsverbindung mit dem Remote-Application-Server (100) normal ist, und
einen hybriden Steuerbefehl zum Steuern eines Renderings an einem Renderer erzeugt, wenn die Sitzungsverbindung nicht störungsfrei ist.

2. Teilnehmerendgerät (210) gemäß Anspruch 1, wobei die Verschlüsselungsverarbeitungseinheit (214) einen Eintragsanforderungsbefehl (encryptionPinModeEnter) des Verschlüsselungs-PIN-Modus von dem Remote-Application-Server (100) empfängt und eine Steuerung zum Umschalten des Verschlüsselungs-PIN-Modus durch die Modusumschalteinheit auf Basis des Eintragsanforderungsbefehls durchführt.

3. Teilnehmerendgerät (210) gemäß Anspruch 1, wobei der spezielle Schlüsselcode unabhängig von dem Schlüsselcode zufällig generiert wird.

4. Teilnehmerendgerät (210) gemäß Anspruch 1, wobei die Verschlüsselungsverarbeitungseinheit (214) den PIN-Code-Anforderungs-Befehl (getPin), der die Anforderung des PIN-Codes umfasst, über den sicheren Kommunikationskanal empfängt und eine Steuerung zum Übertragen des gespeicherten PIN-Codes an den Remote-Application-Server (100) in Reaktion auf den PIN-Code-Anforderungs-Befehl durchführt.

5. Teilnehmerendgerät (210) gemäß Anspruch 4, wobei die Verschlüsselungsverarbeitungseinheit (214) einen Verlassen-Anforderungs-Befehl des Verschlüsselungs-PIN-Modus (encryptionPinModeExit) von dem Remote-Application-Server (100) empfängt und eine Steuerung zum Verlassen des Verschlüsselungs-PIN-Modus durch die Modusumschalteinheit auf Basis des empfangenen Verlassen-Anforderungs-Befehls durchführt.

6. Teilnehmerendgerät (210) gemäß Anspruch 5, ferner umfassend eine Speichereinheit (213) zum Speichern eines PIN-Codes, der dem eingegebenen PIN-Code entspricht, wobei die Verschlüsselungsverarbeitungseinheit (214) nach dem Verlassen des Verschlüsselungs-PIN-Modus den in der Speichereinheit (213) gespeicherten PIN-Code initialisiert.

7. Remote-Application-Server (100), der mindestens zeitweise von einem Computer implementiert wird, umfassend:
eine Bestimmungseinheit (110) zum Bestimmen eines Eintrags eines Verschlüsselungs-PIN-Modus aus einem Schlüssel-Ereignis, das von einem Teilnehmerendgerät (210) empfangen wurde;
eine Steuerbefehls-Erzeugungseinheit (130) zum Erzeugen eines Steuerbefehls, der mindestens einen aus einem Eintragsanforderungsbefehl des Verschlüsselungs-PIN-Modus (encryptionPinModeEnter), einem PIN-Code-Anforderungs-Befehl (getPin) und einem Verlassen-Anforderungs-Befehl des Verschlüsselungs-PIN-Modus (encryptionPinModeExit) gemäß dem Eintragsbestimmungsergebnis des Verschlüsselungs-PIN-Modus umfasst; und
eine Steuereinheit (120) zum Durchführen eines Verschlüsselungsprozesses für einen Schlüsselcode, der in dem Verschlüsselungs-PIN-Modus eingegeben wird, wobei der Remote-Application-Server (100) einen PIN-Code-Anforderungs-Befehl (getPin), der eine Anforderung des PIN-Codes umfasst, über den sicheren Kommunikationskanal sendet, um auf den von der Verschlüsselungsverarbeitungseinheit (214) empfangenen speziellen Schlüsselcode zu antworten,
wobei das Teilnehmerendgerät (210) bestimmt, ob eine Sitzungsverbindung mit dem Remote-Application-Server (100) normal ist, und
einen hybriden Steuerbefehl zum Steuern eines Renderings an einem Renderer erzeugt, wenn die Sitzungsverbindung nicht störungsfrei ist.

8. Remote-Application-Server (100) gemäß Anspruch 7, wobei die Steuereinheit (120) eine Erzeugung eines Eintragsanforderungsbefehls des Verschlüsselungs-PIN-Modus gemäß einem Eintragsbestimmungsergebnis des Verschlüsselungs-PIN-Modus steuert und den erzeugten Eintragungsanforderungsbefehl an das Teilnehmerendgerät (210) überträgt.

9. Remote-Application-Server (100) gemäß Anspruch 7, wobei die Steuereinheit (120) einen speziellen Schlüsselcode empfängt, der aus dem Schlüsselcode umgewandelt wurde, der in dem Verschlüsselungs-PIN-Modus von dem Teilnehmerendgerät (210) eingegeben wurde, und eine Erzeugung eines PIN-Code-Anforderungs-Befehls steuert, der einen PIN-Code anfordert, der dem empfangenen speziellen Schlüsselcode entspricht.

10. Remote-Application-Server (100) gemäß Anspruch 9, wobei die Steuereinheit (120) eine Steuerung zum Übertragen des PIN-Code-Anforderungs-Befehls an das Teilnehmerendgerät (210) über einen sicheren Kommunikationskanal durchführt.

11. Remote-Application-Server (100) gemäß Anspruch 10, wobei die Steuereinheit (120) in Reaktion auf den übertragenen PIN-Code-Anforderungs-Befehl einen PIN-Code über den sicheren Kommunikationskanal von dem Teilnehmerendgerät (210) empfängt.

12. Remote-Application-Server (100) gemäß Anspruch 11, wobei die Steuereinheit (120) nach dem Empfangen des PIN-Codes eine Steuerung zum Erzeugen eines Verlassen-Anforderungs-Befehls für den Verschlüsselungs-PIN-Modus durchführt und den erzeugten Verlassen-Anforderungs-Befehl an das Teilnehmerendgerät (210) überträgt.

13. Remote-Application-Server (100) gemäß Anspruch 12, wobei das Teilnehmerendgerät (210) den gespeicherten PIN-Code auf Basis des empfangenen Verlassen-Anforderungs-Befehls initialisiert.

14. Verfahren zum Betreiben eines Teilnehmerendgeräts (210), wobei das Verfahren umfasst:
Umschalten in einen Verschlüsselungs-PIN-Modus auf Basis eines von einem Remote-Application-Server (100) empfangenen Steuerbefehls;
Umwandeln eines Schlüsselcodes, der in dem Verschlüsselungs-PIN-Modus eingegeben wird, in einen speziellen Schlüsselcode und Übertragen des umgewandelten speziellen Schlüsselcodes an den Remote-Application-Server (100);
Empfangen einer Anforderung eines PIN-Codes, der dem speziellen Schlüsselcode entspricht, von dem Remote-Application-Server (100) über einen sicheren Kommunikationskanal; und
Übertragen des gespeicherten PIN-Codes an den Remote-Application-Server (100) über den sicheren Kommunikationskanal in Reaktion auf die Anforderung, wobei der Remote-Application-Server (100) einen PIN-Code-Anforderungs-Befehl (getPin), der eine Anforderung des PIN-Codes umfasst, über den sicheren Kommunikationskanal sendet, um auf den von der Verschlüsselungsverarbeitungseinheit (214) empfangenen speziellen Schlüsselcode zu antworten,
wobei das Teilnehmerendgerät (210) bestimmt, ob eine Sitzungsverbindung mit dem Remote-Application-Server (100) normal ist, und
einen hybriden Steuerbefehl zum Steuern eines Renderings an einem Renderer erzeugt, wenn die Sitzungsverbindung nicht störungsfrei ist.

15. Verfahren zum Betreiben eines Remote-Application-Servers (100), wobei das Verfahren umfasst:
Bestimmen eines Eintrags eines Verschlüsselungs-PIN-Modus gemäß einem Schlüssel-Ereignis, das von einem Teilnehmerendgerät (210) empfangen wurde;
Erzeugen eines Steuerbefehls, der mindestens einen aus einem Eintragsanforderungsbefehl des Verschlüsselungs-PIN-Modus (encryptionPinModeEnter), einem PIN-Code-Anforderungs-Befehl (getPin) und einem Verlassen-Anforderungs-Befehl des Verschlüsselungs-PIN-Modus (encryptionPinModeExit) gemäß dem Eintragsbestimmungsergebnis des Verschlüsselungs-PIN-Modus umfasst; und
Durchführen eines Verschlüsselungsprozesses für einen Schlüsselcode, der in dem Verschlüsselungs-PIN-Modus eingegeben wird, wobei der Remote-Application-Server (100) einen PIN-Code-Anforderungs-Befehl (getPin), der eine Anforderung des PIN-Codes umfasst, über den sicheren Kommunikationskanal sendet, um auf den von der Verschlüsselungsverarbeitungseinheit (214) empfangenen speziellen Schlüsselcode zu antworten,
wobei das Teilnehmerendgerät (210) bestimmt, ob eine Sitzungsverbindung mit dem Remote-Application-Server (100) normal ist, und
einen hybriden Steuerbefehl zum Steuern eines Renderings an einem Renderer erzeugt, wenn die Sitzungsverbindung nicht störungsfrei ist.

## Revendications

1. Dispositif terminal d'abonné (210) en vue d'un traitement de chiffrement d'événement de clé, au moins temporairement mis en oeuvre par un ordinateur, comprenant :
une unité de commutation de mode (211) commutant vers un mode PIN de chiffrement sur la base d'une instruction de commande reçue en provenance d'un serveur d'application distant (100) ;
une unité de conversion de code (212) convertissant un code de clé, qui est entré dans le mode PIN de chiffrement, en un code de clé spécial, et transmettant le code de clé spécial converti au serveur d'application distant (100) ; et
une unité de traitement de chiffrement (214) recevant une demande concernant un code PIN correspondant au code de clé spécial en provenance du serveur d'application distant (100) par le biais d'un canal de communication sécurisé, et mettant en oeuvre une commande de sorte que le code PIN stocké dans le dispositif terminal d'abonné (210) est transmis au serveur d'application distant (100) par le biais du canal de communication sécurisé en réponse à la demande ;
le serveur d'application distant (100) envoyant une instruction de demande de code PIN (getPin) comprenant une demande concernant le code PIN à travers le canal de communication sécurisé, afin de répondre au code de clé spécial reçu en provenance de l'unité de traitement de chiffrement (214) ;
où le dispositif terminal d'abonné (210) détermine si une connexion de session avec le serveur d'application distant (100) est normale ; et
génère une instruction de commande hybride visant à commander un rendu au niveau d'un moteur de rendu si la connexion de session n'est pas lisse.

2. Dispositif terminal d'abonné (210) selon la revendication 1, dans lequel l'unité de traitement de chiffrement (214) reçoit une instruction de demande d'entrée (encryptionPinModeEnter) du mode PIN de chiffrement en provenance du serveur d'application distant (100), et met en oeuvre une commande visant à commuter le mode PIN de chiffrement à travers l'unité de commutation de mode sur la base de l'instruction de demande d'entrée.

3. Dispositif terminal d'abonné (210) selon la revendication 1, dans lequel le code de clé spécial est généré arbitrairement indépendamment du code de clé.

4. Dispositif terminal d'abonné (210) selon la revendication 1, dans lequel l'unité de traitement de chiffrement (214) reçoit l'instruction de demande de code PIN (getPin) comprenant la demande du code PIN par le biais du canal de communication sécurisé, et met en oeuvre une commande pour transmettre le code PIN stocké au serveur d'application distant (100), en réponse à l'instruction de demande de code PIN.

5. Dispositif terminal d'abonné (210) selon la revendication 4, dans lequel l'unité de traitement de chiffrement (214) reçoit une instruction de demande de sortie du mode PIN de chiffrement (encryptionPinModeExit) en provenance du serveur d'application distant (100), et met en oeuvre une commande pour sortir du mode PIN de chiffrement à travers l'unité de commutation de mode sur la base de l'instruction de demande de sortie reçue.

6. Dispositif terminal d'abonné (210) selon la revendication 5, comprenant en outre une unité de stockage (213) stockant un code PIN correspondant au code de clé d'entrée, dans lequel l'unité de traitement de chiffrement (214) initialise le code PIN stocké dans l'unité de stockage (213) après avoir quitté le mode PIN de chiffrement.

7. Serveur d'application distant (100) au moins temporairement mis en oeuvre par un ordinateur, comprenant :
une unité de détermination (110) déterminant l'entrée d'un mode PIN de chiffrement à partir d'un événement de clé reçu en provenance d'un dispositif terminal d'abonné (210) ;
une unité de génération d'instruction de commande (130) générant une instruction de commande comprenant au moins l'une quelconque parmi une instruction de demande d'entrée du mode PIN de chiffrement (encryptionPinModeEnter), une instruction de demande de code PIN (getPin), et une instruction de demande de sortie du mode PIN de chiffrement (encryptionPinModeExit), selon le résultat de détermination d'entrée du mode PIN de chiffrement ; et
une unité de commande (120) mettant en oeuvre un processus de chiffrement pour un code de clé qui est entré dans le mode PIN de chiffrement, le serveur d'application distant (100) envoyant une instruction de demande de code PIN (getPin) comprenant une demande concernant le code PIN par le biais du canal de communication sécurisé afin de répondre au code de clé spécial reçu en provenance de l'unité de traitement de chiffrement (214) ;
où le dispositif terminal d'abonné (210) détermine si une connexion de session avec le serveur d'application distant (100) est normale ; et
génère une instruction de commande hybride visant à commander un rendu au niveau d'un moteur de rendu si la connexion de session n'est pas lisse.

8. Serveur d'application distant (100) selon la revendication 7, dans lequel l'unité de commande (120) commande la génération d'une instruction de demande d'entrée du mode PIN de chiffrement selon un résultat de détermination d'entrée du mode PIN de chiffrement et transmet l'instruction de demande d'entrée générée au dispositif terminal d'abonné (210).

9. Serveur d'application distant (100) selon la revendication 7, dans lequel l'unité de commande (120) reçoit un code de clé spécial converti à partir du code de clé qui est entré dans le mode PIN de chiffrement, en provenance du dispositif terminal d'abonné (210), et commande la génération d'une instruction de demande de code PIN demandant un code PIN correspondant au code de clé spécial reçu.

10. Serveur d'application distant (100) selon la revendication 9, dans lequel l'unité de commande (120) met en oeuvre une commande pour transmettre l'instruction de demande de code PIN au dispositif terminal d'abonné (210) par le biais d'un canal de communication sécurisé.

11. Serveur d'application distant (100) selon la revendication 10, dans lequel l'unité de commande (120) reçoit un code PIN par le biais du canal de communication sécurisé, en réponse à l'instruction de demande de code PIN transmise à partir du dispositif terminal d'abonné (210).

12. Serveur d'application distant (100) selon la revendication 11, dans lequel l'unité de commande (120) met en oeuvre une commande de génération d'une instruction de demande de sortie pour le mode PIN de chiffrement, suite à la réception du code PIN, et transmet l'instruction de demande de sortie générée au dispositif terminal d'abonné (210).

13. Serveur d'application distant (100) selon la revendication 12, où le dispositif terminal d'abonné (210) initialise le code PIN stocké sur la base de l'instruction de demande de sortie reçue.

14. Procédé d'exploitation d'un dispositif terminal d'abonné (210), le procédé comprenant les étapes ci-dessous consistant à :
commuter vers un mode PIN de chiffrement sur la base d'une instruction de commande reçue en provenance d'un serveur d'application distant (100) ;
convertir un code de clé, qui est entré dans le mode PIN de chiffrement, en un code de clé spécial, et transmettre le code de clé spécial converti au serveur d'application distant (100) ; et
recevoir une demande concernant un code PIN correspondant au code de clé spécial en provenance du serveur d'application distant (100) par le biais d'un canal de communication sécurisé ; et
transmettre le code PIN stocké au serveur d'application distant (100) par le biais du canal de communication sécurisé en réponse à la demande, le serveur d'application distant (100) envoyant une instruction de demande de code PIN (getPin) comprenant une demande concernant le code PIN à travers le canal de communication sécurisé, afin de répondre au code de clé spécial reçu en provenance de l'unité de traitement de chiffrement (214) ;
où le dispositif terminal d'abonné (210) détermine si une connexion de session avec le serveur d'application distant (100) est normale ; et
génère une instruction de commande hybride visant à commander un rendu au niveau d'un moteur de rendu si la connexion de session n'est pas lisse.

15. Procédé d'exploitation d'un serveur d'application distant (100), le procédé comprenant les étapes ci-dessous consistant à :
déterminer l'entrée d'un mode PIN de chiffrement selon un événement de clé reçu en provenance d'un dispositif terminal d'abonné (210) ;
générer une instruction de commande comprenant au moins l'une quelconque parmi une instruction de demande d'entrée du mode PIN de chiffrement (encryptionPinModeEnter), une instruction de demande de code PIN (getPin), et une instruction de demande de sortie du mode PIN de chiffrement (encryptionPinModeExit), selon le résultat de détermination d'entrée du mode PIN de chiffrement ; et
mettre en oeuvre un processus de chiffrement pour un code de clé qui est entré dans le mode PIN de chiffrement, le serveur d'application distant (100) envoyant une instruction de demande de code PIN (getPin) comprenant une demande concernant le code PIN par le biais du canal de communication sécurisé afin de répondre au code de clé spécial reçu en provenance de l'unité de traitement de chiffrement (214) ;
où le dispositif terminal d'abonné (210) détermine si une connexion de session avec le serveur d'application distant (100) est normale ; et
génère une instruction de commande hybride visant à commander un rendu au niveau d'un moteur de rendu si la connexion de session n'est pas lisse.
